# EUROPEAN PATENT SPECIFICATION

(11) **EP 2 264 348 B1**
(45) Date of publication and mention of the grant of the patent: **13.06.2018**
(21) Application number: 09731506.3
(22) Date of filing: 09.02.2009
(51) Int. Cl.: F16L 33/207, F16L 13/14

(54) **ACCESSORY FOR QUICK TUBE COUPLING**
ZUBEHÖRTEIL ZUM SCHNELLEN VERBINDEN VON ROHREN
ACCESSOIRE POUR LE RACCORDEMENT RAPIDE DE TUBES

(30) Priority: 17.04.2008 ES 200800790 U
(43) Date of publication of application: 22.12.2010
(73) Proprietor: Multitubo Montaje Y Distribución, S.L., 45950 Casarrubios del Monte (Toledo) (ES)
(72) Inventor: GUTIÉRREZ PÉREZ, Román, E-45950 Casarrubios del Monte (Toledo) (ES)
(74) Representative: Linage González, Rafael
(86) International application number: PCT/ES2009/000070
(87) International publication number: WO 2009/127752

(56) References cited:
- WO-A1-2008/009573
- DE-A1- 10 217 829
- DE-A1- 19 828 141
- DE-C1- 10 033 206
- DE-C1- 19 929 010
- US-A- 6 099 045
- US-A1- 2006 220 378
- US-A1- 2008 067 809

## Description

### Field of the Invention

The present invention relates to an accessory used for quick tube coupling, in the fields of plumbing, heating, gas and air conditioning, such as male connectors, female connectors, elbows, T-pieces, sleeves, distributors, etc.

The object of the invention is to provide any of the mentioned accessories with a substantially improved nipple, which facilitates the assembly of the tube considerably, and which provides improved safety in terms of coupling sealing.

### Background of the Invention

In one accessory of those mentioned above, such as for example a fixed male connector, said connector has a single outlet provided with a male thread in order to be able to couple the part where necessary, and opposite said outlet an inlet formed as a nipple, to which the corresponding tube is coupled by simple pressure. This part, which can be made indistinctly of plastic or of brass, receives on the nipple, more specifically on the mentioned tube once the latter has been introduced, a bushing and a bushing carrier, the latter for holding the former, which consists of a metal cylinder on which a pressure is exerted with suitable tools so that the tube is pressed against the accessory such that the attachment is sealed.

The main problem of these accessories lies in the existence on the market of different types of clamps for the pressure coupling thereof, which clamps dimensionally vary in their diameter, such that an accessory suitably dimensioned to that effect is necessary for one of them.

Obviously, this diversity of accessories has negative repercussions at the level of costs, both from the manufacture point of view and from the storage, distribution point of view, etc.

DE-A-19828141 discloses a device accessory for quick tube coupling, including only two O-rings in corresponding grooves.

### Description of the Invention

The accessory proposed by the as defined by claim 1 fully and satisfactorily solves the aforementioned drawbacks, such that it has a series of improvements of its nipples, allowing the use of different clamps, logically within certain limits, assuring an easy assembly of the original accessory and a perfect coupling sealing.

To that end, more specifically and according to one of the improvements of the invention, the existence in the bushing carrier, i.e., in the part of plastic supporting the bushing which constricts the tube against the accessory, of a precise adjustment area has been provided, where there are no considerable tolerances when placing the bushing carrier, this being considered the problem of the conventional bushing carriers which even allow them to come out of their place.

The nipple begins with a straight segment, compared to the current crests which start suddenly against the upper flange of the bushing carrier, this improvement preventing the detrimental effects of a possible oblique cut in the tube, because although the installer intends to, he does not always cut the tubes on an imaginary plane perpendicular to the axis thereof. With the accessory of the invention a totally cylindrical area is provided which eliminates the consequences of this type of cut, since behind the cut area there is only an area of tube which will be in contact with the cylindrical area of the beginning of the nipple.

According to another of the features of the invention, the existence in the body of the nipple of rounded or peripherally grooved areas has been provided, which areas determine a low pressure safety band. In the event of overpressure of the installation, water could pass, but upon reaching the first grooved area it would find a place, the one defined in the perimeter of the nipple, therefore it would lose this overpressure and would not move forward to the beginning of the nipple. On the contrary, in the current nipples of the market there are small channels with a square section, therefore in the event that the mentioned overpressure in the installation occurs, these square channels would be filled with water and there would be a water pressure concentration area with the slightest imperfection or mark in any part of the crown of the wall of the channel, therefore the overpressure effects would be increased, the leakage risk being even higher.

In addition, since it is a rounded profile the cutting risk of the tube, which risk exists with the current saw teeth or square channel profiles, such that in the event that the tube has a thickness in the high area of the tolerance, or that the machine exerts a pressure that is slightly higher than the proper pressure, these profiles can be driven into the inner plastic area of the tube, cutting it, whereby the passage of water is freed up.

It has also been provided that compared to the classic pair of O-rings of the nipple, which absorb the effects of expansion of the accessory tube caused by heat changes, three and only three O-rings are established, which offers a maximum safety compared to different clamps, with different widths, since under any circumstances at least two of the mentioned O-rings are operative, assuring the sealing.

It has also been provided that the free end of the nipple is bevelled and rounded to facilitate the manoeuvre of introducing same inside the tube.

It has also been provided that the plastic bushing carrier includes indicators to assure the assembler that the tube has been introduced to the end and that the placement is therefore correct.

The mentioned bushing carrier furthermore acts as a guide when placing the clamps, compared to the bushing carriers of the market which are simply a mere support for fixing the bushing, and do not act as guides.

Finally and according to another of the features of the invention, since the indicators are located in the bushing carrier, said indicators are prevented from having to be included in the steel bushing, as conventionally occurs, wherein these orifices or indicators are made by means of punching or drilling, which involves a considerable risk that the pressure exerted on the wall of the bushing during the punching or drilling causes a deformation, specifically an ovaling deformation thereof, which makes the introduction of the tube difficult.

### Description of the Drawings

To complement the description which is being made and for the purpose of aiding to better understand the features of the invention according to a preferred practical embodiment thereof, a set of drawings is attached as an integral part of said description in which the following has been depicted with an illustrative and non-limiting character:
Figure 1 shows a side elevational and one-fourth section view of a certain example of an accessory for quick tube coupling made according to the object of the mentioned invention, specifically of a fixed male connector.
Figure 2 shows a depiction similar to Figure 1, in which the mentioned connector is shown duly coupled to a tube and fixed thereto by means of the bushing and corresponding or complementary bushing carrier.

### Preferred Embodiment of the Invention

In view of the described figures it can be seen how the proposed accessory includes, as is conventional and from a polygonal core (1), an outlet (2) with a male thread (3) in the chosen practical embodiment, but which likewise could be formed as a T-piece, an elbow, etc., and opposite said outlet (2) a nipple (4) intended to receive the tube (5) for conducting the fluid in question, which tube (5) is fixed to the nipple (4) by means of pressure, with the aid of a steel bushing (6) and a plastic bushing carrier (7).

The bushing carrier (7) has at its end corresponding to the core (1) a constriction (8) which is coupled in an adjustment area (9) of the nipple (4), consisting of a likewise perimetric channel, which stabilizes said bushing carrier (7) in an axial direction, and consequently the bushing (6) associated therewith.

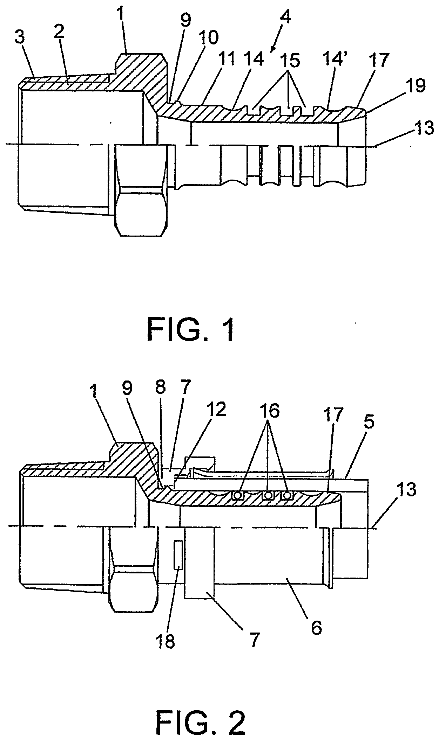

From the mentioned adjustment area (9) of the nipple and from the flange (10) for access thereto, in the nipple (4) there is defined a straight sector (11) for a perfect seating thereon of the tube (5), as is seen in Figure 2, such that the width of this straight sector (11) assures a perfect sealing for the tube (5), regardless of whether the latter has been cut at its end (12) according to a plane perfectly perpendicular to its own axis (13), or with higher or lower obliquity.

Next to this straight segment (11) of the nipple there is established therein a peripherally, grooved sector (14) matching another one (14') existing at its free end dimensionally and in shape, the function of these grooved areas being to provide the nipple with a low pressure safety band, as has been previously mentioned, furthermore eliminating the cutting risk of the tube (5). The edges of the concave curved profiles of the two rounded areas (14, 14') lie all in a line parallel to the longitudinal axis (13) of the accessory.

Three peripheral grooves (15) receiving respective gaskets (16) are established between the two curved recesses (14-14'), wherein the distance between the first gasket groove and the second gasket groove is bigger than the distance between the second gasket groove and the third gasket groove in a direction parallel to the longitudinal axis (13) of the accessory from the inner or first end of the nipple towards the free end of the nipple.

It is finally indicated that, as is especially seen in Figure 2, the free end (19) of the nipple (4), in addition to have a rounded edge, also has a bevelling (17), which decisively affects the greater ease of penetration of the nipple (4) in the tube (5).

Going back to the bushing carrier (7), the latter includes the orifices or indicators (18) for verifying that the tube (5) has achieved a penetration level suitable for the mentioned accessory, which avoids the need for classic indicators on the steel bushing (6), which is behind in relation to said indicators (18), the bushing carrier (7) furthermore acting as a route when placing the clamps for constricting the bushing (6).

## Claims

1. An accessory for quick tube coupling that can be formed as a fixed male connector, a female connector, a T-piece, an elbow, an attachment sleeve or the like, said accessory including a nipple, a bushing and a corresponding bushing carrier, said nipple being engageable at the end of a complementary tube, with respect to which a seal is established by means of pressure with the aid of said bushing and said bushing carrier, wherein the inner or first end of said nipple includes an engagement area (9) for the bushing carrier (7), beyond which a straight segment (11) parallel to the axis (13) of the nipple is established, which terminates in a peripherally grooved area (14) having a concave curved profile matching that of another similar area (14') located close to the free end of the nipple, O-rings for establishing a seal in relation to the tube (5) being provided between the two peripherally grooved rounded areas (14-14'), **characterized in that** it includes three and only three grooves (15) for as many O-rings (16) between the two peripherally grooved areas (14, 14') for establishing a seal in relation to the tube (5), **in that** the distance between the first O-ring groove and the second O-ring groove is bigger than the distance between the second O-ring groove and the third O-ring groove in a direction parallel to the longitudinal axis (13) of the accessory from the inner or first end of the nipple towards the free end of the nipple, and **in that** a further peripherally grooved area having a concave curved profile is provided between the two consecutive O-ring grooves which are arranged further away from each other.

2. The accessory for quick tube coupling according to claim 1, **characterized in that** the edges of the concave curved profiles of the two matching peripherally grooved rounded areas (14, 14') lie all in a line parallel to the longitudinal axis (13) of the accessory.

## Patentansprüche

1. Zubehörteil zum schnellen Verbinden von Rohren, das als ein fester Steckverbinder, ein Buchsenverbinder, ein T-Stück, ein Winkelstück, eine Befestigungshülse oder dergleichen ausgebildet sein kann, wobei das Zubehörteil einen Nippel, eine Muffe und einen entsprechenden Muffenträger aufweist, wobei der Nippel am Ende eines komplementären Rohrs in Eingriff bringbar ist, in Bezug auf das eine Abdichtung mittels Druck mit Hilfe der Muffe und des Muffenträgers hergestellt wird, wobei das innere oder erste Ende des Nippels einen Eingriffsbereich (9) für den Muffenträger (7) umfasst, über den hinaus ein parallel zu der Achse (13) des Nippels verlaufender gerader Abschnitt (11) hergestellt ist, der in einem um den Umfang genuteten Bereich (14) endet, der ein konkaves, gekrümmtes Profil aufweist, das mit einem anderen in der Nähe des freien Endes des Nippels angeordneten ähnlichen Bereich (14') zusammenpasst, wobei zwischen den beiden um den Umfang genuteten, gerundeten Bereichen (14-14') O-Ringe zum Herstellen einer Abdichtung in Bezug auf das Rohr (5) vorgesehen sind, **dadurch gekennzeichnet, dass** es drei und nur drei Nuten (15) für so viele O-Ringe (16) zwischen den zwei um den Umfang genuteten Bereichen (14, 14') zum Herstellen einer Abdichtung in Bezug auf das Rohr (5) umfasst, dadurch, dass der Abstand zwischen der ersten O-Ringnut und der zweiten O-Ringnut größer ist als der Abstand zwischen der zweiten O-Ringnut und der dritten O-Ringnut in einer Richtung parallel zu der Längsachse (13) des Zubehörteils von dem inneren oder ersten Ende des Nippels in Richtung des freien Endes des Nippels, und dadurch, dass ein weiterer um den Umfang genuteter Bereich ein konkaves, gekrümmtes Profil aufweist, das zwischen den zwei aufeinanderfolgenden O-Ringnuten, die weiter voneinander weg angeordnet sind, vorgesehen ist.

2. Zubehörteil zum schnellen Verbinden von Rohren nach Anspruch 1, **dadurch gekennzeichnet, dass** die Kanten des konkaven, gekrümmten Profils der zwei zusammenpassenden, um den Umfang genuteten, gerundeten Bereiche (14, 14') alle in einer Linie parallel zu der Längsachse (13) des Zubehörteils liegen.

## Revendications

1. Accessoire pour accouplement rapide de tube qui peut être formé comme un connecteur mâle fixe, un connecteur femelle, une pièce en T, un coude, un manchon de fixation ou analogue, ledit accessoire comprenant un raccord, une bague et un support de bague correspondant, ledit raccord pouvant être mis en prise au niveau de l'extrémité d'un tube complémentaire, par rapport auquel un joint est établi au moyen d'une pression, avec l'aide de ladite bague et dudit support de bague, dans lequel la première extrémité ou extrémité interne dudit raccord comprend une zone de mise en prise (9) pour le support de bague (7), au-delà de laquelle un segment droit (11) parallèle à l'axe (13) du raccord est établi, qui se termine en une zone rainurée de manière périphérique (14) ayant un profil incurvé concave correspondant à celui d'une autre zone similaire (14') située à proximité de l'extrémité libre du raccord, des joints toriques pour établir un joint par rapport au tube (5) étant prévus entre les deux zones arrondies rainurées de manière périphérique (14-14'), **caractérisé en ce qu'**il comprend trois et seulement trois rainures (15) pour autant de joints toriques (16) entre les deux zones rainurées de manière périphérique (14, 14') afin d'établir un joint par rapport au tube (5) **en ce que** la distance entre la rainure du premier joint torique et la rainure du deuxième joint torique est supérieur à la distance entre la rainure du deuxième joint torique et la rainure du troisième joint torique dans une direction parallèle à l'axe longitudinal (13) de l'accessoire depuis la première extrémité ou extrémité interne du raccord vers l'extrémité libre du raccord et **en ce qu'**une autre zone rainurée de manière périphérique ayant un profil incurvé concave est prévue entre les rainures des deux joints toriques consécutifs qui sont disposés les plus éloignés l'un de l'autre.

2. Accessoire pour un accouplement rapide de tube selon la revendication 1, **caractérisé en ce que** les bords des profils incurvés concaves des deux zones arrondies rainurées de manière périphérique (14, 14') reposent tous sur une ligne parallèle à l'axe longitudinal (13) de l'accessoire.
